# EUROPEAN PATENT SPECIFICATION

(11) **EP 2 114 120 B1**
(45) Date of publication and mention of the grant of the patent: **09.01.2013**
(21) Application number: 07701625.1
(22) Date of filing: 07.02.2007
(51) Int. Cl.: A01D 41/02, A01F 7/06

(54) **Cereal combine**
Mähdrescher
Moissonneuse-batteuse de céréales

(43) Date of publication of application: 11.11.2009
(60) Divisional application: 12174321.5
(73) Proprietor: Adam, Julio, 98850-000 Vitória Das Missões (BR)
(72) Inventor: Adam, Julio, 98850-000 Vitória Das Missões (BR)
(74) Representative: Lorente Berges, Ana
(86) International application number: PCT/BR2007/000042
(87) International publication number: WO 2008/106752

(56) References cited:
- EP-A1- 0 473 893
- EP-A1- 1 103 176
- DE-A1- 3 205 748
- DE-A1- 3 737 123
- FR-A5- 2 084 877
- GB-A- 1 027 040
- US-A- 3 426 760
- US-A- 4 594 840
- US-A- 4 696 152
- US-A- 4 739 774
- US-A- 5 496 215
- US-A- 5 906 091
- US-B1- 6 358 142

## Description

This invention refers to a cereal Combine intended to provide a new layout for manufacturing this type of equipment and it will count on a Frame endowed with flexible suspension. Front mobile steering. Bringing the innovation of a huller Set with cylinder of three hammer phases and sieves that work with tracks system and hammers in a snail shape. Everything linked to a harvest header with a bowing system of the reel set and feeding shaft and with side oscillation provided by pendulum fitting systems.

The Combines known in the market are very efficient; however, they have some inconveniences that impair their work efficiency to be totally explored. There are still some inconveniences in mounting the operation devices so that besides rendering the operation for the workers they also present risk for security and quality losses of the cereals harvested.

Some of these inconveniences may be mentioned as an example, such as the existing Combines unload system which is installed beside the cabin entrance (left), so that, when making the unload of the cereals harvested, the operator has too much difficulty with the dust excess formed in the cabin entrance.

Another remarkable inconvenience is that the existing Combines sieves system relies only on one or two falls and does not offer regular forms to increase them, which are responsible for the first phase of separation of the cereals already threshed by the impurity thresher cylinder, such as rests of dust, little pod fragments, straws, etc.

There is also the inconvenience that become a security matter, which is the fact that the cereals unload is made by shafts with endless thread, both in the containers under the sieves and in the internal part of the bulk carrier, and there are even cases of people who lost hands or arms in these shafts with endless thread which work like mincers, and in addition to this the system ends up spoiling, even minimally, the cereals, which lose their quality.

The existing Combines are not manufactured with the hydraulic Cylinder system in the front suspension and that has been introduced in this invention, so that they don't have a damping system and a system of vertical movement of the front wheels, which provides a suspension flexibility; therefore eliminating this problem.

Another common aspect of the existing Combines refers to the sieves Set in the lower part of the thresher cylinder where it is impossible to proceed with the adjustment in certain parts of the sieves, considering that the sieves (concave) of the existing combines contain only one phase and start in the Combine's intermediate part and the entire parts are formed by big trays or sieves, causing big inconveniences in the harvesting of some kinds of harvests, such as corn and wheat etc, since as it is impossible to adjust the height of the sieves or the trays, the quality control of the grains threshed is made difficult.

Headers that enable a suspension vertical bowing system are not known and they allow the harvest cutting and feeding devices to have a bowing in shape of suspension and we also don't know that Headers move vertically by means of pendulums like this claim.

Considering all these difficulties and inconveniences and attempting to overcome them, we have developed this Combine, object of the claims, and it will be better understood by means of the figures attached, where:

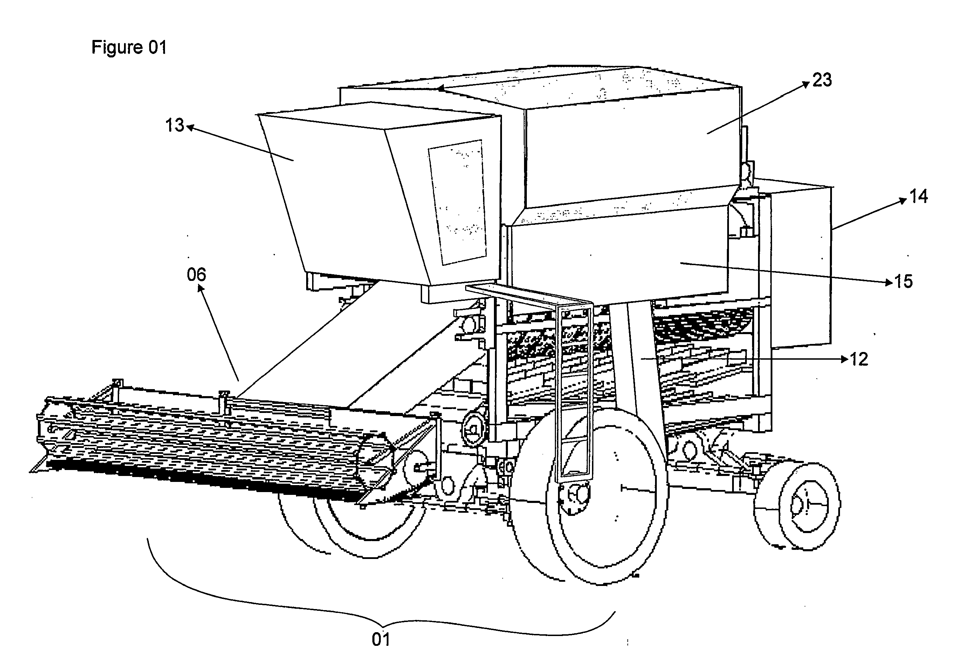

**Figure 1** represents the Combine duly mounted with a perspective sight.

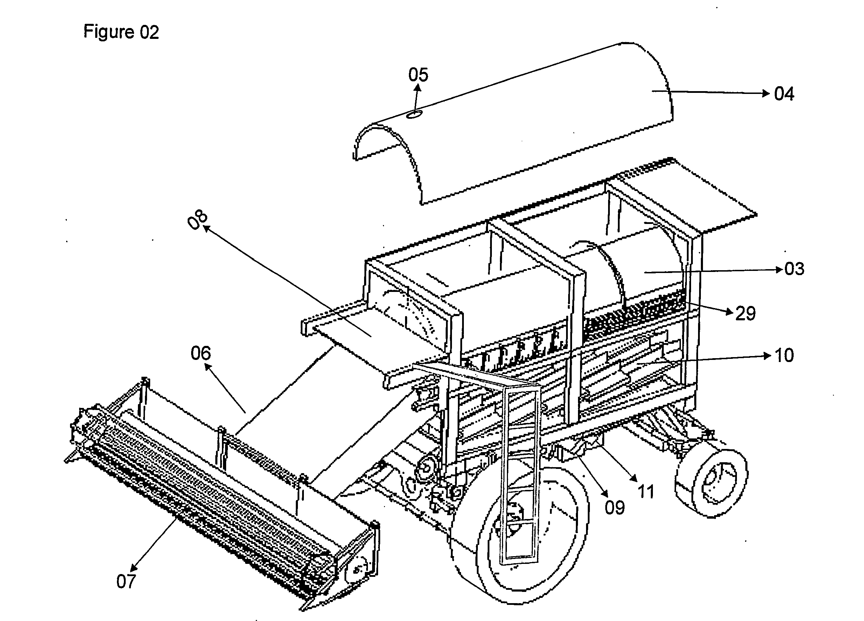

**Figure 2** represents the Combine with a perspective sight with removal of the thresher set Cover and the operators Cabin.
**Figure 3** represents the Combine with a side sight at the back with remark to grains Elevator (12) so as to allow a view of its internal system of cereal transport to the bulk carrier.

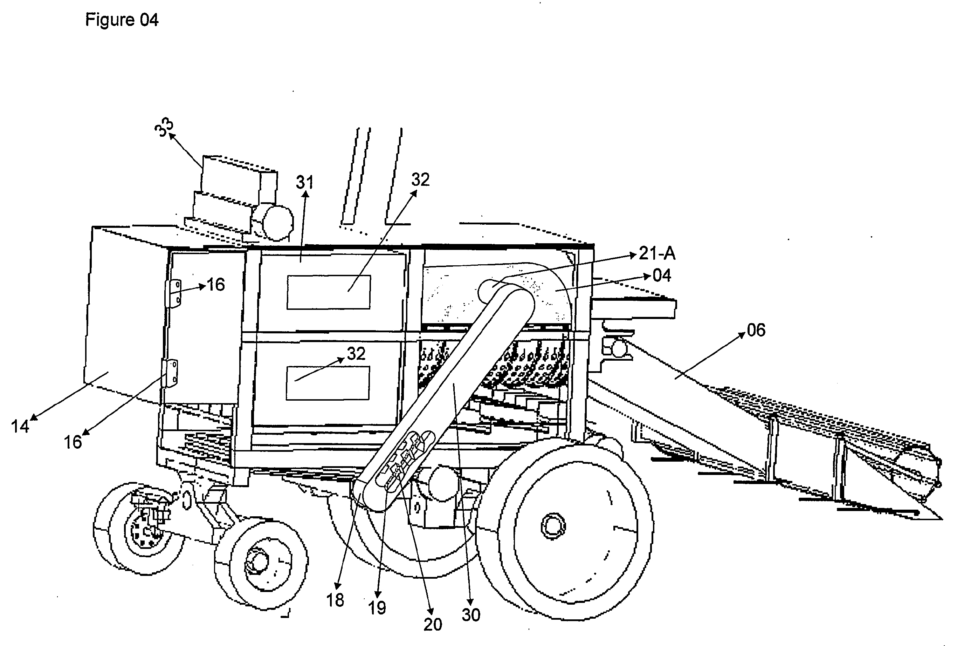

**Figure 4** represents the right side sight with remark to re-tracking elevator (30).
**Figure 5** represents the Combine with a right side cutting so as to allow a sieves innovating system view, with remark to the front suspension system detail "B".

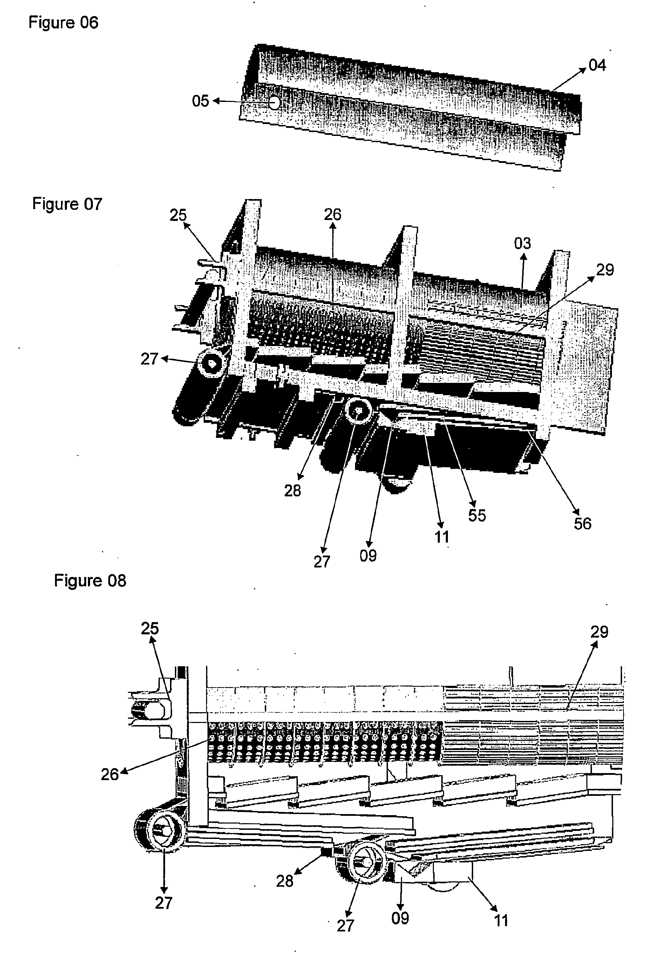

**Figure 6** represents the Combine thresher set with remark to the side lower sight.
**Figure 7** represents a lower side view of the thresher Set mounted over separator Set (02) of this Combine claim.
**Figure 8** represents a separator Set side cutting view (02) as shown in figure 7 duly installed over Combine sieves (26 and 29)

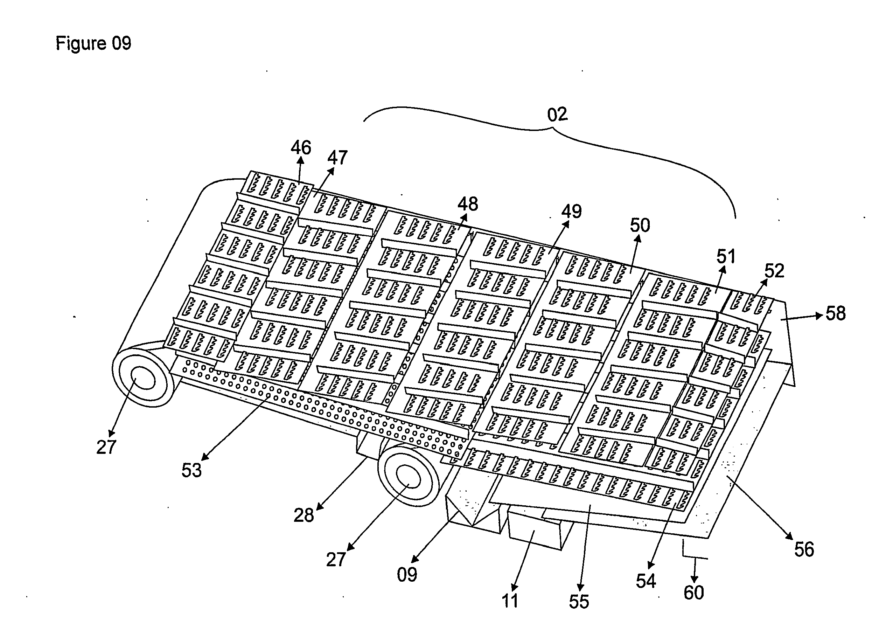

**Figure 9** represents Combine separator Set (02) with a perspective higher view.
**Figure 10** represents the sieves that form Combine separator Set (02) first phase with a perspective view.
**Figure 11** represents the Sieves that form Combine separator Set (02) second phase with a perspective view.
**Figure 12** represents Combine separator Set (02) lower part with a perspective view and with remark on detail "C".

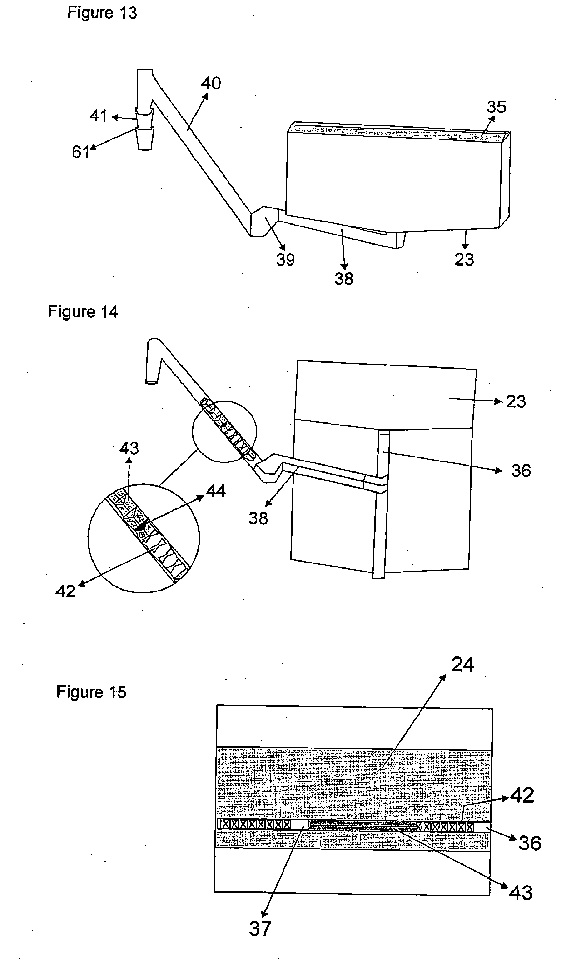

**Figure 13** represents a Combine bulk carrier Set side view with its unload pipe.
**Figure 14** represents the same Combine bulk carrier Set shown in figure 13 with an inner view.
**Figure 15** represents a Combine Bulk Carrier inner higher view.

As the figures enclosed illustrate we consider that this invention is composed by the cereal Combine (01) mounted with a grains separator Set (02); a thresher Cylinder Set (03) which is covered by a higher cover (04) with a retrack return Opening (05) This Combine will still count upon a harvest Header (06) endowed with a creeping Reel (07), one operation cabin (13) installed in its soil (08), with the installation of the bulk carrier Tank in its higher part (23) the grains Elevator in the right side (12) and the retrack Elevator in the left side (30), also containing a back Cowl (14) which is driven like an opening and closing door by means of the Hinges (16) and of the Lock (17) for the internal maintenance, by the back part of the thresher Cylinder (03) and the sieves Set (47/56), and also the side protection Walls (31) that have maintenance Windows (32).

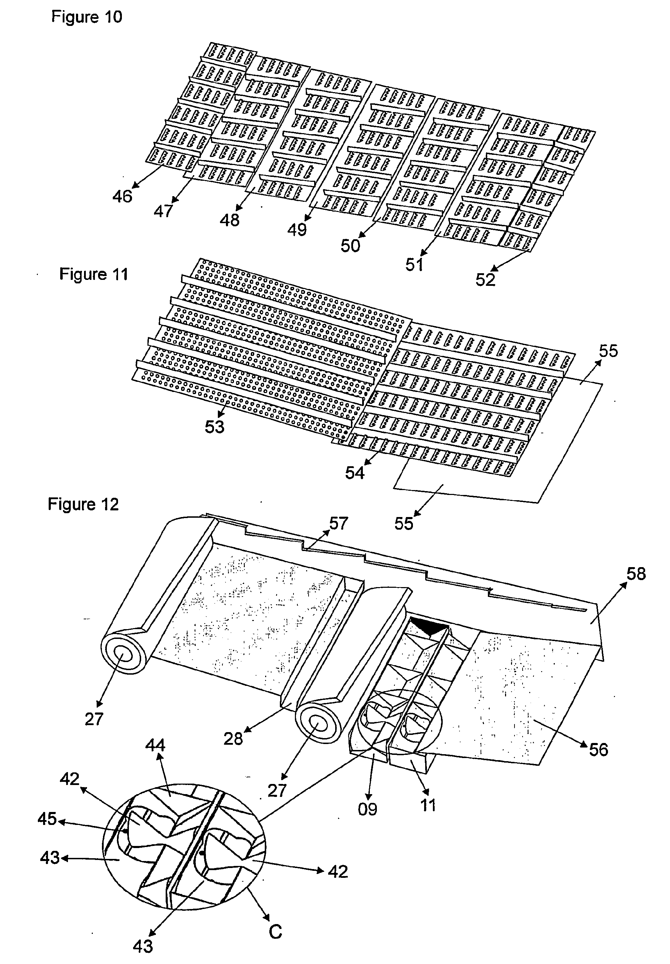

The grains and impurities separator Set (02) that is an innovation of this invention is installed right below the thresher Set formed by the cylinder (03) and the Sieves (26 and 29) so as to receive the cereal grains that are threshed right in the entry of the thresher Cylinder, and to run all the extension of the thresher Set and pass by the front (26) and back (29) Sieves so that its composition begins in a first phase of separation through the mounting of a higher peeling Plates layer (46, 47, 48, 49, 50, 51 and 52) as we can view in figure 10, that is mounted on the adjustment Supports (57) in the internal sides of the side Walls (58) so as to enable the regulation of the peeling Plates in at least six or seven falls, so that, with the vibrating functioning of the separator Set (02), the cereal grains will be separated from the impurities, that is: earth, little stones, little pieces of straw, etc., so that these residues will be falling in a lower Sieve (53) and the cereal grains will fall on the second separation phase through the lower peeling Plate (54). The impurities that fall in the lower Sieve (53) will be filtered by the holes and will fall on the impurities Plate (28), while the cereals that also fall on this sieve (53) will follow, due to its vibrating move, until they fall in the lower peeling Plate (54) so that this is the last step for separation and the clean cereals will finally fall on the draining Plate (55) and will slip directly to the grains Container (09) to be unloaded within the grains Elevator (12) and to be unloaded in the bulk carrier Tank (23) through the unload Pipe (21).

It's important to note that this separator Set is endowed with two air turbines or fans (27) that will be working constantly during the impurity separation process to blow through the peeling Plates and the Sieves so that the pieces of straw or plantation branches that manage to overcome the threshing will get out by the bottom of the separator Set (02) which is open, differently from those existing nowadays, and it's also important to stress that in the lower part of this separator Set (02) we have the retrack draining Plate (56), which on purpose, is manufactures with a extension bigger than the others, providing a size difference (60) that will enable that the combs or pods, with the most resisting cereals that have not been threshed, are drained to the retrack Housing (11) and return by the retrack elevator (30) up to the entry (05) of the Cover (04) passing by the retrack unload Pipe (21-A), likewise, this separator Set will have back opening, differently from the current machines, which will allow for the exit of the impurities accumulated that will be blown by the action of the air turbine (27).

One important innovation that this invention brings is the fact that the grains Housing (09), of the retrack Housing (11), of the higher draining Channel (36), of the lower draining Channel (37) and of the unload Pipes (38 and 40) are internally endowed with the grains transport system, through a tracks Set (43) that will work on the guide Rollers (42) in constant circulation provided by motive power, directly on the side Pins (45) which in turn will turn the guide Rollers (42) that due to their format and for the spaced installation of the division Supports (44) on the Track (43) will form little trays that will carry the cereal grains softly, eliminating the traditional system used composed by a Shaft with endless thread, which remains solely in places totally closed and that don't offer risks to the operators for being inside the clean grains unload Pipes (21) and the retrack unload Pipe (21-A) which will internally have an endless thread Shaft (22).

The lower unload Pipe (38) and the higher unload Pipe (40) will be interconnected by a connector Knee (39) which will be manufactured with internal gear so as to enable its side and frontal upwards and downwards moving in order to enable an easy, quick unload and in any place reached by the higher unload Pipe (40) which will still count, in its exit tip, on unload Guides (41) that in their lower part will have male fittings to receive by fitting other unload Guides (41) in order to enable the mounting of as many Guides as one wishes.

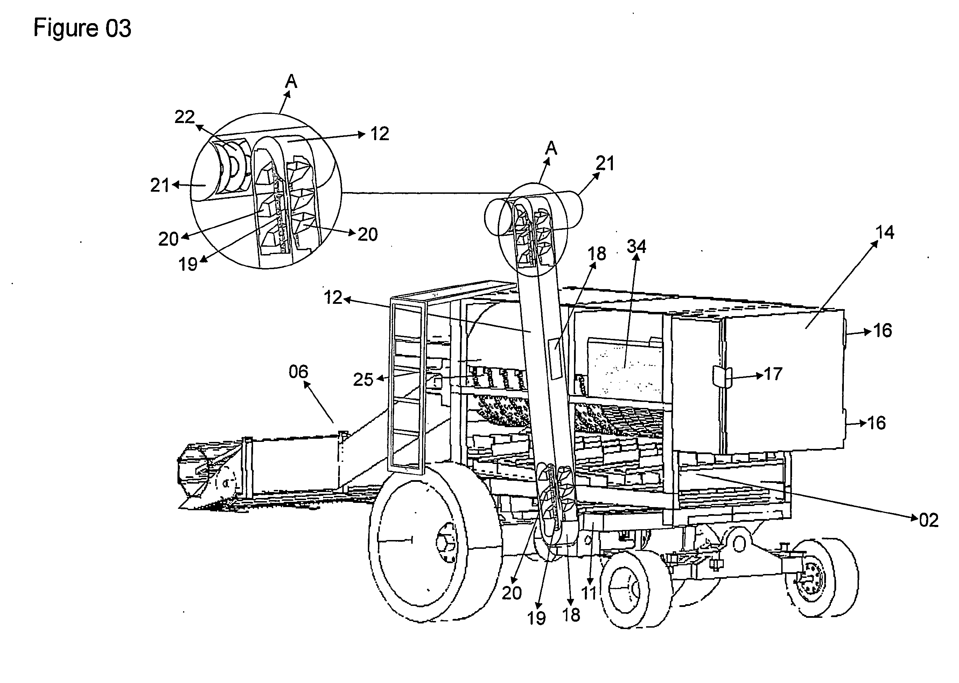

The Elevators also present internal transport systems of the grains to avoid spoiling the cereals and enable their transportation up to the unload within the Internal Housing (24) of the bulk carrier Tank (23), considering that these Elevators are formed by a system of Chains (19) that work in a rotating manner through the crowns installed internally, so that in these Chains (19) the Collectors (20) will be fixed and they, for having a cup shape, will eliminate the little spoils caused to the cereal grains as shown in detail "A" amplified in figure 3, in order to improve the quality of the cereals harvested, increasing the production of the internal transport which is also made through endless thread shafts.

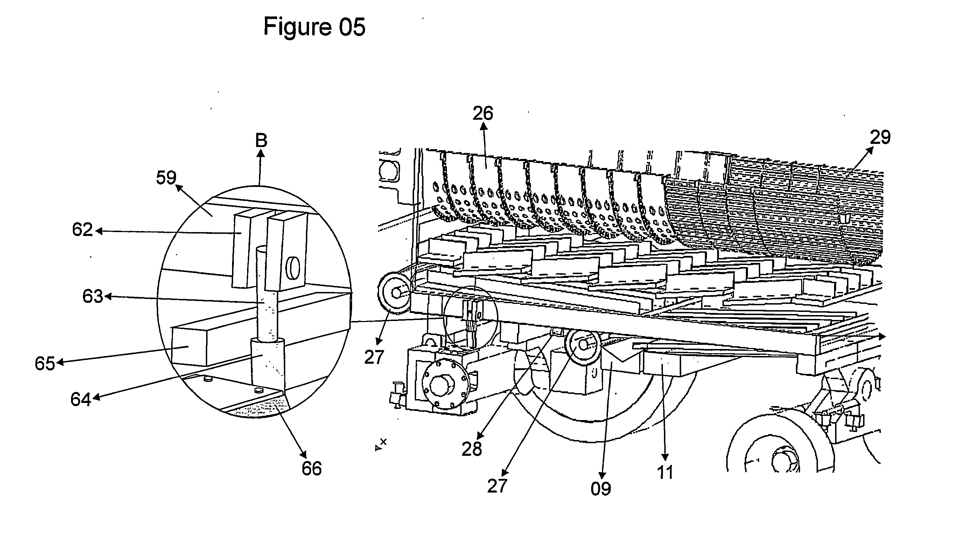

This Combine (01) will have frontal suspension, allied to a frontal wheels steering system that will work in convergence with the back wheel steering and will enable a quicker and more efficient maneuver in less space and obviously will be driven by force Engine (33) will have fuel Tank (34); the bulk carrier Tank will have a higher Cover (35); the Combine frontal Suspension will be possible due to its installation on the Frame with the suspension already mentioned as the estate-of-the-art so that the mounting will occur on the frame Feeder (59) and on the hydraulic Cylinders (64) with hydraulic Pistons (63) installed on the fixing Support (62) and in the frame sustaining Bar (65) on the Combine differential Shaft, interconnecting the steering Box (66) of both sides as illustrated in detail "B" amplified in figure 5.

This cereal Combine with such a utility and practicity is sure to be manufactured with size and capacity variations of harvesting to meet all kinds of cereal crops.

## Claims

1. Cereals combine **characterized by** comprising a grains separator Set (02) endowed with a thresher Cylinder (03) with hammers mounted in three phases and in diagonal line to work on a thresh sieves Set (26 and 29) covered by a Higher Cover (04) and with sieves Set (47/56) in the lower part, as well as a harvest Header (06) endowed with creeping Reel (07) mounted with vertical Supports (325) and on flexible Shoes (306) for the cereals pruning and creeping, in addition to being endowed with a bulk carrier Tank (23) with grains Elevator (12) by the right side and retract Elevator (30) by the left side, with grains Housing (09), a retrack Housing (11) and air Turbines (27) besides containing a grains separator Set (02) in its whole lower extension of the thresher Set formed by the thresher Cylinder (03) and by the Sieves (26 and 29) and also for containing in this grains separator Set (02), the grains Housing (09) and the retrack Set (11) endowed internally with a grains transportation system through a tracks Set (43) that will work on the guiding rollers (42) in constant circulation, provided by the motive power directly on the side Pins (45), which in turn will turn the guiding Rollers (42), that, due to their format and for the spaced installation of the division Supports (44) on the Tracks (43) will form the transporting trays.

2. Cereals combine according to claim 1, further comprising a bulk carrier Tank (23), the higher draining Channel (36) and the lower draining Channel (37) endowed internally with a grains transportation system through a tracks Set (43) that will work on the guiding rollers (42) in constant circulation, provided by the motive power directly on the side Pins (45), which in turn will turn the guiding Rollers (42), that, due to their format and for the spaced installation of the division Supports (44) on the Tracks (43) will form the transporting trays, besides containing a bulk carrier Tank (23), the unload Pipes (38 and 40) endowed internally with a grains transportation system through a tracks Set (43) that will work on the guiding Rollers (42) in constant circulation, provided by the motive power directly on the side Pins (45), which in turn will turn the guiding Rollers (42), that, due to their format and for the spaced installation of the division Supports (44) on the Tracks (43) will form the transporting trays, containing in the unload Pipes (38 and 40) one connector knee (39) that will be manufactured with internal gears so as to enable its side and frontal motion upwards and downwards so as to enable an easy, quick unload and in any place reached by the higher unload Pipe (40) which will still count, in its exit tip, on unload Guides (41) that in their lower part will have male fittings to receive by fitting other unload Guides (41) in order to enable the mounting of as many Guides as one wises.

3. Cereals combine according to claim 1, further comprising a grains Elevator (12) and the retrack Elevator (30) installed in opposite sides, so that the grains Elevator (12) remains besides the operator's entrance and the retrack Elevator (30) is installed beside the bulk carrier Tank (23) unload Pipes and the grains Elevator (12) and in the retrack Elevator (30) a grains internal transportation system formed by the Collectors sets (20) in shape of cups fixed on the Chains (19) that work in a turning motion through crowns installed internally, so in the grains Elevator (12) and in the retrack Elevator (30) containing a transportation system also for a tracks Set (43) that will work on the guiding Rollers (42) in constant circulation, provided by the motive power directly on the side Pins (45), which in turn will turn the guiding Rollers (42), that, due to their format and for the spaced installation of the division Supports (44) on the Tracks (43) will form the transporting trays, in addition the higher peeling Plates adjustment (46, 47, 48, 49, 50, 51 and 52) they are made through the regulations Supports (57) laid in the internal sides of the side walls (58).

## Patentansprüche

1. Mähdrescher, **gekennzeichnet durch** eine Kornabscheiderbaugruppe (02), mit Dreschzylinder (03) mit diagonal versetzten Dreschelementen, die auf eine Siebbaugruppe (26 und 29) schlagen, verkleidet mit einer Haube (04) im oberen Bereich und ausgestattet mit einer Siebbaugruppe (47/56) im unteren Bereich, dazu versehen mit einem Mähbalken (06) mit Einzugswalze (07), montiert auf senkrechten Stützen (325) und flexiblen Kufen (306) zum Einziehen und Mähen von Getreide, zudem ausgestattet mit einem Kornbunker (23) mit Kornförderer (12) auf der rechten und Umwälzförderer (30) auf der linken Seite, mit einem Korngehäuse (09), einem Umwälzgehäuse (11) und Gebläsen (27), zusätzlich beinhaltend eine Kornabscheiderbaugruppe (02) im gesamten unteren Bereich der Drescherbaugruppe, gebildet **durch** den Dreschzylinder (03) und die Siebe (26 und 29), wobei die Kornabscheiderbaugruppe (02) zudem ausgestattet ist mit dem Korngehäuse (09) und der umwälzbaugruppe (11), die intern mit einem Kornfördersystem in Form einer Förderbaugruppe (43) versehen ist, die auf ständig drehenden Führungsrollen (42) läuft, deren Antrieb direkt **durch** die Seitenzapfen (45) erfolgt, welche ihrerseits die Führungsrollen (42) antreiben, die aufgrund ihres Formats und der Installation der Unterteilungsstützen (44) mit dazwischenliegendem Abstand auf den Spuren (43) die Förderschalen bilden.

2. Mähdrescher nach Anspruch 1, zudem beinhaltend einen Kornbunker (23), den oberen Absaugkanal (36) und den unteren Absaugkanal (37), welche intern mit einem Kornförderystem in Form eines Fördersystems (43) ausgestattet sind, welches auf Ständig drehenden Führungsrollen (42) läuft, deren Antrieb direkt durch die Seitenzapfen (45) erfolgt, welche ihrerseits die Führungsrollen (42) antreiben, die aufgrund ihres Formats und der Installation der Untertellungsstützen (44) mit dazwischenliegendem Abstand auf den Spuren (43) die Förderschalen bilden, zusätzlich ausgestattet mit einem Kornbunker (23), den Entladekanälen (38 und 40), welche intern mit einem Kornförderystem in Form eines Fördersystems (43) ausgestattet sind, welches auf ständig drehenden Führungsrollen (42) läuft, deren Antrieb direkt durch die Seitenzapfen (45) erfolgt, welche ihrerseits die Führungsrollen (42) antreiben, die aufgrund ihres Formats und der Installation der Untertellungsstützen (44) mit dazwischenliegendem Abstand auf den Spuren (43) die Förderschalen bilden, ausgestattet in den Entladekanälen (38 und 40) mit einem Anschluss-Rohrbogen (39), der intern so ausgestattet ist, dass er sich seitlich und frontal nach oben und unten bewegen lässt und so ein einfaches und schnelles Entladen an einem beliebigen vom oberen Entladekanal (40) erreichten Punkt ermöglicht, wobei die Auslass-Spitze des Kanals stets zusätzlich Entlade-Führungen (41) besitzt, die in ihrem unteren Bereich Nippelanschlüsse aufweisen, an denen weitere Entlade-Führungen (41) angeschlossen werden können, so dass man beliebig viele Führungen aneinander montieren kann.

3. Mähdrescher nach Anspruch 1, zudem beinhaltend einen Kornförderer (12) und den umwälzförderer (30), jeweils an gegenüberliegenden Seiten montiert, so dass sich der Kornförderer (12) neben der Bedienertür und der Umwälzförderer (30) neben den Entladckanälen des Kornbunkers (23) befindet, wobei sich im Kornförderer (12) und im Umwälzförderer (30) ein internes Kornfördersystem befindet, welches gebildet wird aus den Sammlerbaugruppen (20) in Form von Schalen, die auf Ketten (19) montiert sind, die in einer drehenden Bewegung über intern montierte Kronen geführt werden, so dass im Kornförderer (12) und im Umwälzförderer (30) ein Fördersystem ebenfalls in form einer Förderbaugruppe (43) besteht, welches auf ständig drehenden Führungsrollen (42) läuft, deren Antrieb direkt durch die Seitenzapfen (45) erfolgt, welche ihrerseits die Führungsrollen (42) antreiben, die aufgrund ihres Formats und der Installation der Unterteilungsstützen (44) mit dazwischenliegendem Abstand auf den Spuren (43) die Forderschalen bilden, wobei zusätzlich die Justierung der oberen Spreutrennplatten (46, 47, 48, 49, 50, 51 und 52) durch die Einstellstützen (57) erfolgt, die an den Innenseiten der Seitenwände (58) eingesetzt sind.

## Revendications

1. Moissonneuse-batteuse **caractérisée par** un trieur-séparateur de grains (02) muni d'un cylindre de battage (03) à battoirs montés en trois phases en diagonale venant frapper un panier de battage (26 et 29) constitué d'un capot (04) en partie supérieure et d'un ensemble de tamis (47-56) en partie inférieure, par un dispositif de coupe (06) constitué d'un rabatteur à griffe (07) monté sur supports verticaux (325) et sur semelles souples (306) pour le rabattage et la coupe des céréales, par une trémie à grains (23) avec élévateur à grains (12) sur la droite et élévateur de recirculation (30) sur la gauche, par un carter à grains (09), un carter de recirculation (11) et des ventilateurs (27), par un trieur-séparateur de grains (02) dans toute la partie inférieure de la batteuse formée par le cylindre de battage (03) et le panier de battage (26 et 29) - trieur-séparateur de grains (02) incluant également les carters à grains (09) et de recirculation (11) qui renferment un système de transport des grains par convoyeur (43) sur rouleaux-guides (42) en circulation constante impulsée par l'entraînement direct d'ergots latéraux (45) entraînant à leur tour les rouleaux-guides (42) lesquels, de par leur forme et l'espacement des cloisons (44) du convoyeur (43), constituent des bacs de transport.

2. Moissonneuse-batteuse de la revendication 1, comprenant également une trémie à grains (23), un évacuateur haut (36) et un évacuateur bas(37) qui renferment un système de transport des grains par convoyeur (43) sur rouleaux-guides (42) en circulation constante impulsée par l'entraînement direct d'ergots latéraux (45) entraînant à leur tour les rouleaux-guides(42) lesquels, de par leur forme et l'espacement des cloisons (44) du convoyeur (43), constituent des bacs de transport, une trémie à grains (23), des tubes de déchargement (38 et 40) comportant un système de transport des grains par convoyeur(43) sur rouleaux-guides (42) en circulation constante impulsée par l'entraînement direct d'ergots latéraux(45) entraînant à leur tour les rouleaux-guides(42) lesquels, de par leur forme et l'espacement des cloisons (44) du convoyeur (43), constituent des bacs de transport et comportant aussi une articulation (39) à engrenages internes capable de se mouvoir dans le sens vertical pour permettre un déchargement rapide et aisé et dans toutes les positions accessibles aux tube de déchargement haut (40) qui comporte en son extrémité de sortie des guides de déchargement (41) auxquels peuvent être ajoutés des raccords mâles permettant de leur brancher d'autres guides de déchargement (41) - de sorte à raccorder autant de guides que souhaité.

3. Moissonneuse-batteuse de la revendication 1, comprenant également un élévateur à grains (12) et un élévateur de recirculation (30) installés sur des bords opposés de sorte que l'élévateur à grains (12) reste à côté de l'accès de l'opérateur et que l'élévateur de recirculation (30) soit à côté des tubes de déchargement de la trémie à graines (23) - élévateurs (12 et 30) qui renferment un système de transport de grains à godets(20) en forme de coupelle fixés à des chaînes (19) tournant autour de roues dentées internes ou bien un système de transport des grains par convoyeur (43) sur rouleaux-guides(42) en circulation constante impulsée par l'entraînement direct d'ergots latéraux (45) entraînant à leur tour les rouleaux-guides(42) lesquels, de par leur forme et l'espacement des cloisons (44) du convoyeur (43), constituent des bacs de transport - ainsi que comprenant un réglage en hauteur des plaques de tamisage (46, 47, 48, 49, 50, 51 et 52) qu'on pratique au moyen des supports régulateurs (57) situés à l'intérieur des parois latérales (58).
